# EUROPÄISCHE PATENTSCHRIFT

(11) **EP 0 537 311 B1**
(45) Veröffentlichungstag und Bekanntmachung des Hinweises auf die Patenterteilung: **17.01.1996**
(21) Anmeldenummer: 92908986.0
(22) Anmeldetag: 16.04.1992
(51) Int. Cl.: B01D 1/22

(54) **DÜNNSCHICHTVERDAMPFER AUS KORROSIONSBESTÄNDIGEM MATERIAL**
THIN-FILM EVAPORATOR MADE OF CORROSION-RESISTANT MATERIAL
EVAPORATEUR A COUCHE MINCE EN MATERIAU RESISTANT A LA CORROSION

(30) Priorität: 02.05.1991 DE 4114334
(43) Veröffentlichungstag der Anmeldung: 21.04.1993
(73) Patentinhaber: BUSS AG, CH-4052 Basel (CH); SGL TECHNIK GMBH, D-86405 Meitingen (DE)
(72) Erfinder: VAN DER PIEPEN, Rolf, D-6308 Buzbach (DE); WEIMANN, Lothar, D-6352 Obermörlen (DE); Künzel, Jürgen Dr.-Ing., D-86672 Thierhaupten (DE)
(74) Vertreter: Langmaack, Jürgen, Dipl.-Ing.
(86) Internationale Anmeldenummer: EP9200856
(87) Internationale Veröffentlichungsnummer: WO9219370

(56) Entgegenhaltungen:
- EP-A- 0 262 510
- DE-A- 2 657 076
- DE-A- 2 830 874
- DE-A- 3 116 309
- DE-B- 1 047 807
- US-A- 3 054 444
- CHEMICAL ABSTRACTS, vol. 103, no. 43, 29. März 1985, Columbus, Ohio, US; abstract no. 72797H, GLANEVA N. N.: 'EXPERIMENTAL BATCH OF DISTILLED WOOD ROSIN' Seite 83

## Beschreibung

Die Erfindung betrifft einen Dünnschichtverdampfer mit einem beheizbaren rohrförmigen Verdampferkörper, in dessen vom Produkt beaufschlagten Innenraum ein mit im wesentlichen radial ausgerichteten Flügeln versehener, von außen antreibbarer Rotor angeordnet ist. Dünnschichtverdampfer der vorbezeichneten Art werden zur Konzentration viskoser, temperaturempfindlicher und/oder belagbildender Stoffe verwendet. Sie beruhen alle auf dem Prinzip, eine dünne Produktschicht im Inneren eines beheizten Zylinders oder Konus mit Hilfe eines umlaufenden Rotors zu erzeugen, so daß die über die Zylinderwandung eingebrachte Wärme zu einer Verdampfung der Flüssigkeit führt, wobei der Dampf nur einen geringen Weg durch das Produkt zurücklegen muß. Damit ist es möglich, feststoffhaltige Flüssigkeiten auf hohe Feststoffkonzentrationen bis zu 80 Gew.-% Trockensubstanz aufzukonzentrieren. Der Rotor besitzt starre Flügel, die einen geringen Spalt von wenigen Millimetern zur beheizten Wand aufweisen oder aber er ist mit beweglichen Wischerblättern ausgestattet, so daß das über die beheizten Wände des Verdampferkörpers laufende Produkt in einem dünnen Produktfilm gehalten werden kann. Bei der Behandlung von korrosiven Medien, beispielsweise bei der Konzentration von mit Feststoffen beladenen Säuren, lassen sich die Koorosionsprobleme mit metallischen Werkstoffen nicht lösen, zumal der Verdampferkörper auch als Druckbehälter ausgelegt sein muß. Versuche mit Emailbeschichtungen vermögen das Korrosionsproblem nur in Sonderfällen zu lösen, zumal es bei größeren Einheiten praktisch nicht möglich ist, die erforderliche mechanische Bearbeitung durchzuführen.

Der Erfindung liegt die Aufgabe zugrunde, einen Dünnschichtverdampfer der eingangs bezeichneten Art so zu gestalten, daß der Verdampferkörper eine hohe Korrosionsbeständigkeit bei guter Wärmeleitfähigkeit aufweist.

Diese Aufgabe wird erfindungsgemäß dadurch gelöst, daß der Verdampferkörper durch wenigstens ein dickwandiges Rohr aus Graphit gebildet wird, daß in der Rohrwandung mehrere im wesentlichen axial verlaufende Bohrungen angeordnet sind, und daß jeweils die Mündungen der Bohrungen an den Rohrenden jeweils in einen Ringkanal ausmünden, der mit einem Anschlußstutzen für ein Heizmedium in Verbindung steht. Überraschend hat sich gezeigt, daß ein derartiger Verdampferkörper aus einem dickwandigen Graphitrohr nicht nur hervorragende Wärmeleiteigenschaften hat, sondern auch ein Durchströmen des Heizmediums bei hohen Drücken ermöglicht. Der Innenraum eines derartigen zylindrischen oder konischen Rohres aus Graphit läßt sich einwandfrei und sehr genau bearbeiten, so daß es möglich ist, mit Hilfe des Rotors den für eine hohe Verdampfungsleistung notwendigen gleichmäßig dünnen Produktfilm auf der Innenwandung des Rohres aufzutragen.

In vorteilhafter Ausgestaltung der Erfindung ist vorgesehen, daß der Ringkanal jeweils in einem gegen das Rohr stirnseitig anlegbaren Spannring als offene Nut ausgebildet ist, daß das Rohr zwischen zwei endseitigen Spannringen über federbelastete Spannanker abgedichtet gehalten ist und daß die Spannringe jeweils mit dem Anschlußstutzen für das Heizmedium versehen sind, der in die zugehörige Nut ausmündet. Die Spannringe sind hierbei aus Metall, vorzugsweise Stahl, hergestellt, wobei die mit dem Produkt in Berührung kommenden Innenflächen mit korrosionsfesten Materialien beschichtet oder ausgekleidet sind. Damit ist auch in diesen Bereichen eine Korrosionsbeständigkeit zu erzielen, wobei ausgenutzt wird, daß im Bereich der Spannringe, die außerhalb des Arbeitsbereiches der Rotorflügel liegen, geringere Anforderungen an die Genauigkeit bestehen. Durch die Verwendung der Spannanker behält der aus Graphit hergestellte Verdampferkörper seine einfache geometrische Form, wobei die Spannanker einschließlich der erforderlichen Spannfedern so ausgelegt sind, daß sie dem durch das Heizmedium aufgebrachten Druck standhalten, d.h. die Spannringe dicht an den Stirnflächen des Graphitrohres in der Anlage halten.

In weiterer Ausgestaltung der Erfindung ist vorgesehen, daß der obere Spannring als Kopfring einen Einlaßstutzen für das zu behandelnde Produkt und einen Abzugsstutzen für die Brüden aufweist. Damit ist dieser Teil einschließlich der Stutzen als in sich geschlossenes Bauteil herzustellen.

In weiterer vorteilhafter Ausgestaltung der Erfindung ist vorgesehen, daß der untere Spannring als Auslaßring mit einem nach innen vorspringenden umlaufenden konischen Kragen versehen ist.

In weiterer bevorzugter Ausgestaltung der Erfindung ist vorgesehen, daß der Rotor mit seinem im Innenraum des Verdampferkörpers liegenden Teil im wesentlichen aus einem Kernrohr aus Graphit besteht, an dem die aus einem Graphit hergestellten Flügel befestigt sind. Damit ist gewährleistet, daß für den vom Rotor mit seinen Flügeln überstrichenen Verdampferbereich einerseits und für den Rotor selbst gleiche Verfahrensbedingungen eingehalten werden können. Hierbei ist es in weiterer Ausgestaltung zweckmäßig, wenn die Flügel durch wenigstens drei schalenförmig gekrümmte dünne Platten gebildet werden, die mit ihren Längsrändern aneinanderliegen und jeweils im Scheitelbereich mittels Spannschrauben am Kernrohr befestigt sind. Hierbei ist es zweckmäßig, wenn das Kernrohr aus Graphit und die Flügel aus einem kohlefaserverstärkten Material, beispielsweise einem kohlefaserverstärkten Kunststoff hergestellt sind, so daß die die Flügel bildenden dünnen gekrümmten Platten unter Spannung mit ihren Rändern gegeneinanderliegen und sich gegenseitig aussteifen.

In weiterer Ausgestaltung der Erfindung ist vorgesehen, daß das den Verdampferkörper bildende dickwandige Rohr und/oder das Kernrohr des Rotors und/oder die Flügel des Rotors aus einem kohlefaserverstärkten Material bestehen. Hierbei ist es zweckmäßig Kombinationen vorzunehmen, so daß beispielsweise das Rohr des Verdampferkörpers aus Graphit hergestellt ist, während der Rotor aus einem kohlefaserverstärkten Material, beispielsweise einem kohlefaserverstärkten Kunststoff hergestellt ist. Der Vorteil besteht darin, daß gerade der Rotor mit seinen Bauteilen einschließlich des Kernrohres aus dünnwandigen Elementen hergestellt werden kann, die eine hohe Festigkeit aufweisen. Dies ist besonders dann interessant, wenn anstelle starrer Flügel der Rotor mit beweglichen Wischerblättern versehen ist. Der Begriff Graphit im Sinne der vorliegenden Erfindung betrifft feinkörnige, poröse Elektrographitkörper, die durch eine Imprägnierung mit hochmolekularen Kunstharzen korrosions-, temperaturbeständig und druckfest gemacht werden.

Die Erfindung wird anhand schematischer Zeichnungen näher erläutert. Es zeigen:
- Fig. 1: einen Dünnschichtverdampfer in einer Seitenansicht,
- Fig. 2: einen Teillängsschnitt durch den rohrförmigen Verdampferkörper,
- Fig. 3: einen Rotor mit starren Flügeln,
- Fig. 4: einen Schnitt durch den Rotor gem. der Linie IV-IV in Fig. 3,
- Fig. 5: einen Schnitt durch den Rotor gem. der Linie V-V in Fig. 3,
- Fig. 6: einen Rotor mit massivem Rotorkörper.

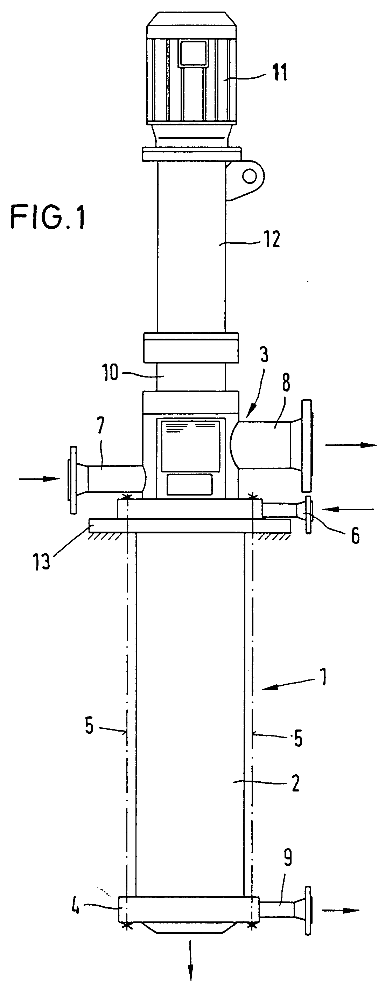

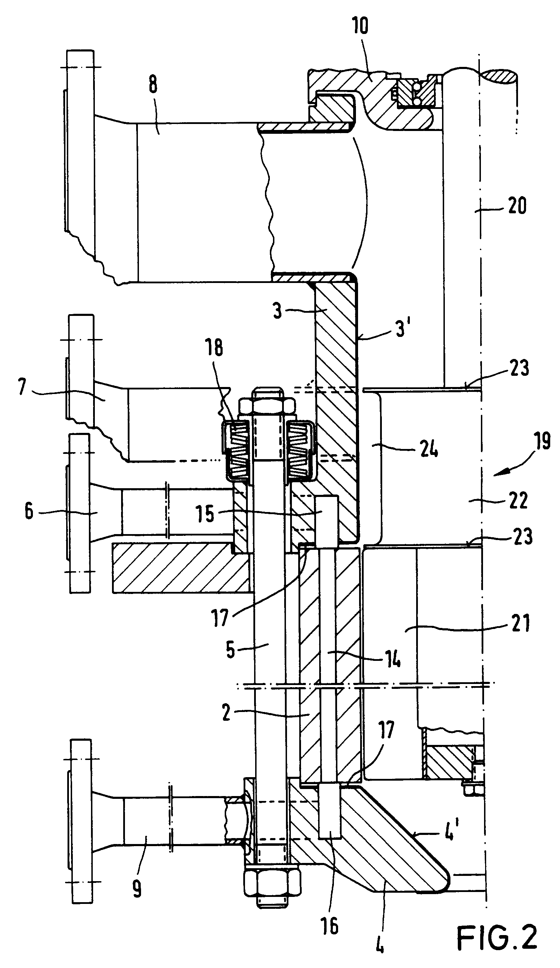

Der in Fig. 1 dargestellte Dünnschichtverdampfer besteht im wesentlichen aus einem Verdampferkörper 1, der ein dickwandiges Rohr aus Graphit aufweist, das in seinem Aufbau anhand von Fig. 2 näher beschrieben werden wird. Das dickwandige Rohr 2 wird stirnseitig durch einen unteren Spannring 4 und einen oberen Spannring 3 mit Hilfe von mehreren gleichmäßig auf den Umfang verteilten Spannankern 5 gegen die Stirnflächen des dickwandigen Rohres 2 gedrückt.

Der obere Spannring 3 ist hierbei als Kopfring ausgebildet und in seinem unmittelbar am Rohr 2 anliegenden Bereich mit einem Anschlußstutzen 6 für den Einlaß eines Heizmediums versehen. Der Kopfring ist ferner mit einem Einlaßstutzen 7 für das zu behandelnde Produkt und einem Abzugsstutzen 8 zum Abzug der durch den Verdampfungsvorgang entstehenden Brüden versehen. Der Spannring 4 ist seinerseits mit einem Anschlußstutzen 9 versehen, durch den das Heizmedium abgezogen wird. Der Aufbau des Kopfringes 3 und des Auslaßringes 4 wird anhand der Schnittdarstellung in Fig. 2 noch näher erläutert werden.

An den Kopfring 3 schließt sich oberhalb ein Gehäuse 10 an, in dem die Lagerung und die Dichtung für die Welle des im Dünnschichtverdampfer angeordneten Rotors hindurchgeführt ist. Der Antriebsmotor 11 stützt sich über einen Wellenschutzrohr 12 auf dem Gehäuse 10 ab. Die gesamte Anordnung ist über den Kopfring 3 auf einem Stützflansch 13 abgestützt und mit diesem lösbar verbunden. Das aufkonzentrierte Produkt tritt aus der durch den Auslaßring 4 gebildeten Austrittsöffnung aus.

Wie aus dem in Fig. 2 wiedergegebenen vertikalen Teillängsschnitt durch den Verdampferkörper 1 ersichtlich, ist das Rohr 2 verhältnismäßig dickwandig ausgebildet und in seiner Wandung mit einer Vielzahl von achsparallelen Bohrungen 14 versehen. Die Bohrungen 14 münden stirnseitig jeweils in eine Nut 15 im Kopfring 3 und eine Nut 16 im Auslaßring 4, die einen Ringkanal bilden und in die die Anschlußstutzen 6 und 9 für das Heizmedium münden. Der Kopfring 3 und der Auslaßring 4 sind über die Zuganker 5 unter Zwischenlage von Dichtungen 17 mit dem Rohr 2 dicht verspannt, wobei die Wärmedehnung des Rohres 2 über ein vorgespanntes Federpaket 18 aufgenommen wird. Kopfring 3 und Auslaßring 4 sind auf ihrer mit dem Produkt in Berührung kommenden Fläche mit einer korrosionsbeständigen Beschichtung 3', 4' versehen.

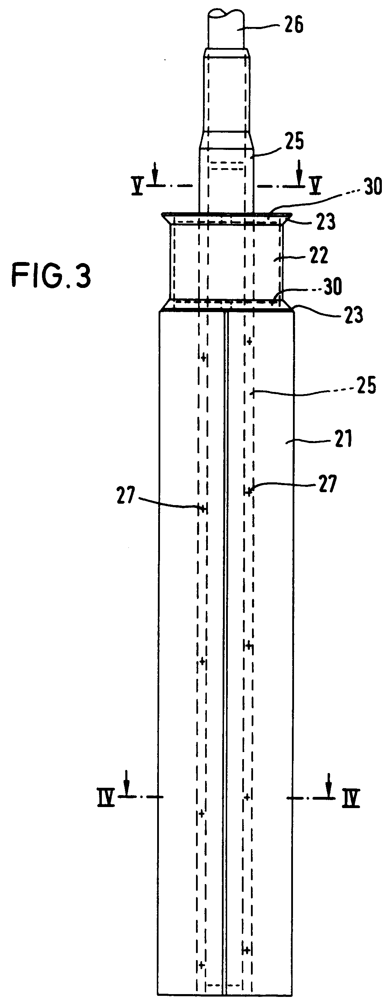

Im Innenraum ist der nur in einem Halbschnitt dargestellte Rotor 19 angeordnet, der an seinem oberen Ende mit einer Anschlußwelle 20 mit dem Antriebsmotor 11 in Verbindung steht. Der im wesentlichen rohrförmig ausgebildete Rotor, der in seinem Aufbau noch anhand der Fig. 3, 4 und 5 beschrieben werden wird, ist mit Flügeln 21 versehen. Die Flügel 21 überdecken, wie Fig. 2 zeigt, nur den Bereich des Rohres 2. Im Bereich des Kopfringes 3 ist der Rotor 19 nach oben mit einem Aufgabering 22 abgeschlossen, der durch einen oberen und unteren Randsteg 23 begrenzt wird, so daß sich hier ein Ringraum 24 bildet, in den der Einlaßstutzen 7 für das zu behandelnde Produkt einmündet, so daß dieses in Form einer dünnen Schicht in das Rohr 2 und damit in den Wirkungsbereich der Flügel 21 des Rotors eintreten kann. Die entstehenden Brüden werden durch den Abzugsstutzen 8, der, je nach Verfahren, auch zur Erzeugung eines Vakuums im Innenraum des Dünnschichtverdampfers dient, abgezogen.

In Fig. 3 ist der Rotor in einer Seitenansicht vollständig dargestellt. Dieser besteht im wesentlichen aus einem Kernrohr 25, auf das die Flügel 21 in der nachstehend noch näher beschriebenen Weise aufgesetzt sind. Der Aufgabering 22 schließt den mit den Flügeln 21 besetzten Bereich nach oben ab. Oberhalb des Aufgaberings 22 ist das Kernrohr 25 an eine mit dem Antriebsmotor 11 verbundene Antriebswelle 26 angeschlossen, die in üblicher Weise aus Stahl hergestellt ist, da dieser Bereich des Rotors bereits oberhalb des die Dichtungen enthaltenen Gehäuses 10 angeordnet ist. Das Kernrohr 25 ist demgegenüber aus Graphit oder einem kohlefaserverstärkten Material hergestellt.

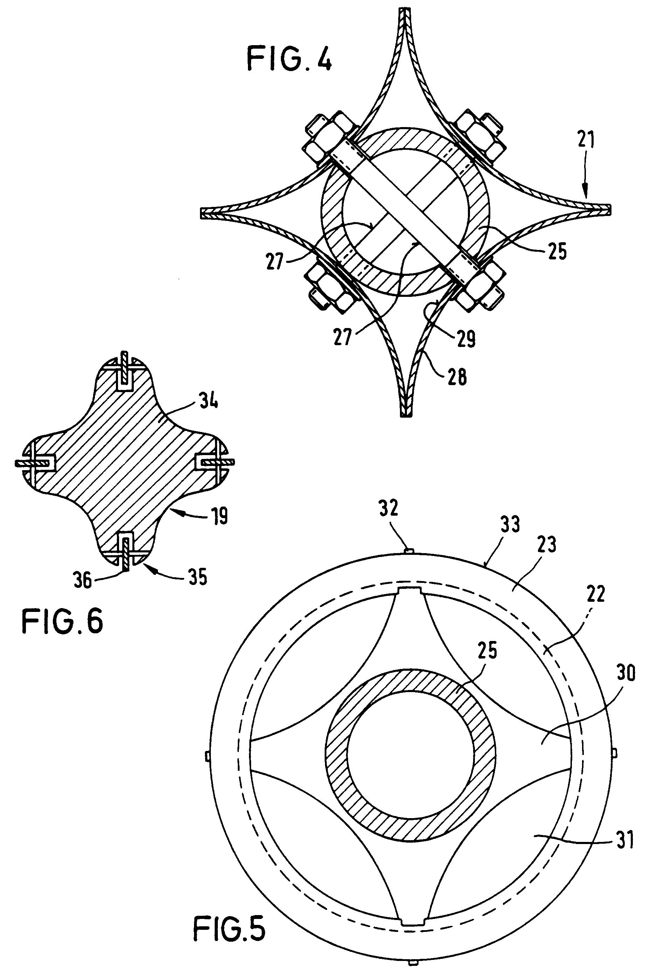

Der Aufbau ist aus Fig. 4 ersichtlich, die in größerem Maßstab den Schnitt IV-IV in Fig. 3 wiedergibt. Das Kernrohr 25 ist hierbei über sein Länge mit mehreren sich mit Abstand kreuzenden Bohrungen versehen, durch die dann Spannschrauben 27 hindurchgesteckt werden können. Die außenliegenden Enden der Spannschrauben sind in Fig. 3 schematisch dargestellt.

Die Flügel 21 des Rotors werden bei der dargestellten Ausführungsform durch vier schalenförmig gekrümmte dünne Platten 28 gebildet, die mit ihren Längsrändern aneinanderliegen, wobei die Spannschrauben 27 im Scheitelbereich 29 die Platten an das Kernrohr 25 andrücken. Wie die in Fig. 5 gezeigte Aufsicht auf den Aufgabering 22 erkennen läßt, sind hier an beiden Enden in etwa sternförmige Platten 30 vorgesehen, deren untere Platte den Zwischenraum zwischen Kernrohr 25 und der Innenseite der Platte 28 abdecken. Der zwischen dem Randsteg 23 innen freibleibende Raum 31 dient als Durchtrittskanal für die abzuziehenden Brüden. Aus der Aufsicht gem. Fig. 5 ist ferner zu erkennen, daß die Außenkanten 32 der Flügel 21 nur geringfügig den Außenrand 33 der Randstege 23 überragt.

Wie die Schnittdarstellung in Fig. 6 zeigt, kann der Rotor 19 auch einen massiven, aus Graphit hergestellten Rotorkörper 34 mit in etwa sternförmigem Querschnitt aufweisen, dessen Endkanten 35 mit vorzugsweise austauschbaren Kantenelementen 36 versehen sind. Diese sich über die Länge des Rotorkörpers 34 erstreckenden, aus einem oder mehreren aneinandergesetzten Teilen bestehenden Kantenelemente sind ebenfalls aus einem korrosionsbeständigem Material, beispielsweise einem kohlefaserverstärkten Material, hergestellt. Die Kantenelemente 36 können hierbei starr oder als bewegliche Wischerblätter mit dem Rotorkörper 34 verbunden sein.

## Patentansprüche

1. Dünnschichtverdampfer mit einem beheizbaren rohrförmigen Verdampferkörper (1), in dessen vom Produkt beaufschlagten Innenraum ein mit im wesentlichen radial ausgerichteten Flügeln (21) versehener, von außen antreibbarer Rotor (19) angeordnet ist, **dadurch gekennzeichnet**,
daß der Verdampferkörper (1) durch wenigstens ein dickwandiges Rohr (2) aus Graphit gebildet wird, daß in der Rohrwandung mehrere im wesentlichen axial verlaufende Bohrungen (14) angeordnet sind, und daß jeweils die Mündungen der Bohrungen (14) an den Rohrenden jeweils in einen Ringkanal (15, 16) ausmünden, der mit einem Anschlußstutzen (6, 9) für ein Heizmedium in Verbindung steht.

2. Dünnschichtverdampfer nach Anspruch 1, dadurch gekennzeichnet, daß der Ringkanal (15, 16) in einem gegen das Rohr (2) stirnseitig anlegbaren Spannring (3, 4) als offene Nut ausgebildet ist, daß das Rohr (2) zwischen zwei endseitigen Spannringen (3, 4) über federbelastete Spannanker (5) abgedichtet gehalten ist und daß die Spannringe (3, 4) jeweils mit einem Anschlußstutzen (6, 9) für das Heizmedium versehen sind, der in die zugehörige Nut ausmündet.

3. Dünnschichtverdampfer nach Anspruch 1 oder 2, dadurch gekennzeichnet, daß der obere Spannring (3) als Kopfring einen Einlaßstutzen (7) für das zu behandelnde Produkt und einen Abzugsstutzen (8) für die Brüden aufweist.

4. Dünnschichtverdampfer nach einem der Ansprüche 1 bis 3, dadurch gekennzeichnet, daß der untere Spannring (4) als Auslaßring mit einem nach innen vorspringenden umlaufenden konischen Kragen versehen ist.

5. Dünnschichtverdampfer nach einem der Ansprüche 1 bis 4, dadurch gekennzeichnet, daß der Kopfring (3) und der Auslaßring (4) aus einen Metall, vorzugsweise Stahl bestehen und auf ihren dem Innenraum zugekehrten Fläche mit einer korrosionsbeständigen Beschichtung (3', 4') versehen sind.

6. Dünnschichtverdampfer nach einem der Ansprüche 1 bis 5, dadurch gekennzeichnet, daß der Rotor (19) mit seinem im Innenraum des Verdampferkörpers (1) liegenden Teil im wesentlichen aus einem Kernrohr (25) aus Graphit besteht, an dem die aus einem Graphit hergestellten Flügel (21) befestigt sind.

7. Dünnschichtverdampfer nach einem der Ansprüche 1 bis 6, dadurch gekennzeichnet, daß die Flügel (21) durch wenigstens drei schalenförmig gekrümmte dünne Platten (28) gebildet werden, die mit ihren Längsrändern aneinanderliegen und jeweils im Scheitelbereich (29) mittels Spannschrauben (27) am Kernrohr (25) befestigt sind.

8. Dünnschichtverdampfer nach einem der Ansprüche 1 bis 7, dadurch gekennzeichnet, daß das Rohr (2) und/oder das Kernrohr (25) des Rotors (19) und/oder die Flügel (21) des Rotors (19) aus einem kohlefaserverstärkten Material bestehen.

9. Dünnschichtverdampfer nach einem der Ansprüche 1 bis 8, dadurch gekennzeichnet, daß der mit Flügeln (21) versehene Rotor (19) an der Peripherie mit austauschbaren, korrosionsbeständigen Kantenelementen (36) versehen ist, die starr und/oder beweglich mit diesem verbunden sind.

10. Dünnschichtverdampfer nach einem der Ansprüche 1 bis 9, dadurch gekennzeichnet, daß der Rotor (19) einen Rotorkörper (34) aufweist, der aus Graphit gearbeitet ist und an der Peripherie mit austauschbaren, korrosiosnbeständigen Kantenelementen (36) versehen ist, die starr und/oder beweglich mit dem Rotorkörper (34) verbunden sind.

## Claims

1. A film evaporator with a heatable tubular evaporator body (1), in the interior of which, which is supplied with product, a rotor (19) provided with substantially radially oriented wings (21) and which can be driven externally is located, characterised in that the evaporator body (1) is formed by at least one thick-walled tube (2) of graphite, that a plurality of substantially axial bores (14) are arranged in the tube wall, and that in each case the mouths of the bores (14) each open out at the tube ends into an annular duct (15, 16) which communicates with a connecting branch (6, 9) for a heating medium.

2. A film evaporator according to Claim 1, characterised in that the annular duct (15, 16) is designed as an open groove in a clamping ring (3, 4) which can be laid on the end face against the tube (2), that the tube (2) is held in sealed manner between two end-face clamping rings (3, 4) by means of spring-loaded clamping ties (5) and that the clamping rings (3, 4) are each provided with a connecting branch (6, 9) for the heating medium which opens into the associated groove.

3. A film evaporator according to Claim 1 or 2, characterised in that the upper clamping ring (3) as top ring has a inlet branch (7) for the product to be treated and an extraction branch (8) for the vapours.

4. A film evaporator according to one of Claims 1 to 3, characterised in that the lower clamping ring (4) as outlet ring is provided with an inwardly-projecting, circumambient, conical collar.

5. A film evaporator according to one of Claims 1 to 4, characterised in that the top ring (3) and the outlet ring (4) are made of a metal, preferably steel, and are provided with a corrosion-resistant coating (3', 4') on their surface facing the interior.

6. A film evaporator according to one of Claims 1 to 5, characterised in that the rotor (19) with its part located in the interior of the evaporator body (1) consists essentially of a graphite inner pipe (25) to which the wings (21), which are made of graphite, are attached.

7. A film evaporator according to one of Claims 1 to 6, characterised in that the wings (21) are formed by at least three thin plates (28) curved in a dish-shape which adjoin each other by their long edges and are each attached to the inner pipe (25) in their apex regions (29) by means of tightening screws (27).

8. A film evaporator according to one of Claims 1 to 7, characterised in that the tube (2) and/or the inner pipe (25) of the rotor (19) and/or the wings (21) of the rotor (19) are made of a material reinforced with carbon fibres.

9. A film evaporator according to one of Claims 1 to 8, characterised in that the rotor (19) provided with wings (21) is provided on the periphery with exchangeable, corrosion-resistant edge elements (36) which are connected rigidly and/or movably thereto.

10. A film evaporator according to one of Claims 1 to 9, characterised in that the rotor (19) has a rotor body (34) which is machined from graphite and is provided on the periphery with exchangeable, corrosion-resistant edge elements (36) which are connected rigidly and/or movably to the rotor body (34).

## Revendications

1. Evaporateur à couche mince comportant un corps tubulaire d'évaporateur (1), chauffable, dans l'espace intérieur, exposé au produit, duquel est disposé un rotor (19) muni d'ailettes (21) orientées sensiblement radialement et pouvant être entraîné de l'extérieur, caractérisé par le fait
que le corps (1) d'évaporateur est formé par au moins un tube de graphite (2) à paroi épaisse, que dans la paroi du tube sont disposés plusieurs perçages (14) orientés sensiblement axialement et que les embouchures de chacun des perçages (14) débouchent, à chacune des extrémités du tube, dans un canal annulaire (15, 16) qui est relié à une tubulure de raccordement (6, 9) pour un fluide chauffant.

2. Evaporateur à couche mince selon la revendication 1, caractérisé par le fait que le canal annulaire (15, 16) est conçu sous forme de rainure ouverte dans un anneau de bridage (3, 4) qui peut s'appliquer frontalement contre le tube (2), que le tube (2) est maintenu, de façon étanche, entre deux anneaux de bridage (3, 4) situés aux extrémités au moyen de tirants (5) contraints par ressort et que les anneaux de bridage (3, 4) sont chacun munis, pour le fluide chauffant, d'une tubulure de raccordement (6, 9) qui débouche dans la rainure correspondante.

3. Evaporateur à couche mince selon la revendication 1 ou 2, caractérisé par le fait que l'anneau de bridage supérieur (3) en tant qu'anneau de tête, présente une tubulure d'entrée (7) pour le produit à traiter et une tubulure d,évacuation (8) pour les vapeurs chaudes.

4. Evaporateur à couche mince selon l'une des revendications 1 à 3, caractérisé par le fait que l'anneau de bridage inférieur (4), en tant qu'anneau de sortie, est muni d'un collet conique périphérique qui fait saillie vers l'intérieur.

5. Evaporateur à couche mince selon l'une des revendications 1 à 4, caractérisé par le fait que l'anneau de tête (3) et l'anneau de sortie (4) sont constitués d'un métal, de préférence l'acier, et sont munis, sur leurs surfaces orientées vers l'espace intérieur, d'un revêtement (3', 4') résistant à la corrosion.

6. Evaporateur à couche mince selon l'une des revendications 1 à 5, caractérisé par le fait que le rotor (19) est, par sa partie située dans l'espace intérieur du corps (1) d'évaporateur, sensiblement constitué d'un noyau tubulaire (25) en graphite auquel sont fixés les ailettes (21) fabriquées en un graphite.

7. Evaporateur à couche mince selon l'une des revendications 1 à 6, caractérisé par le fait que les ailettes (21) sont formées par au moins trois plaques minces (28), qui sont cintrées en forme de coque, s'appuient l'une contre l'autre par leurs bords longitudinaux et sont chacune fixées au noyau tubulaire (25) dans leur zone de sommet (29) au moyen de vis de bridage (27).

8. Evaporateur à couche mince selon l'une des revendications 1 à 7, caractérisé par le fait que le tube (2) et/ou le noyau tubulaire (25) du rotor (19) et/ou les ailettes (21) du rotor (19) sont constitués d'un matériau armé de fibres de carbone.

9. Evaporateur à couche mince selon l'une des revendications 1 à 8, caractérisé par le fait que le rotor (19), muni d'ailettes (21), est muni, à sa périphérie, d'éléments de bordure (36), échangeables, résistants à la corrosion, qui lui sont reliés rigidement et/ou avec liberté de mouvement.

10. Evaporateur à couche mince selon l'une des revendications 1 à 9, caractérisé par le fait que le rotor (19) présente un corps de rotor (34) qui est fabriqué en graphite et qui, à la périphérie, est muni d'éléments de bordure (36) échangeables, résistants à la corrosion qui sont reliés, rigidement et/ou avec liberté de mouvement, au corps du rotor (34).
